# EUROPEAN PATENT APPLICATION

(11) **EP 4 641 406 A1**
(43) Date of publication of application: **29.10.2025**
(21) Application number: 23905753.2
(22) Date of filing: 11.12.2023
(51) Int. Cl.: G06F 16/735, G06F 21/60

(54) **DATA DISCOVERY METHOD AND APPARATUS, AND DEVICE AND STORAGE MEDIUM**

(30) Priority: 19.12.2022 CN 202211635352
(71) Applicant: Douyin Vision Co., Ltd., Beijing 100041 (CN)
(72) Inventor: LI, Chongya, Beijing 100028 (CN); ZHENG, Yu, Beijing 100028 (CN); SHEN, Hongbin, Culver City, CA 90230 (US)
(74) Representative: Isarpatent
(86) International application number: PCT/CN2023/137999
(87) International publication number: WO 2024/131587

(57) **Abstract**

The present disclosure provides a data discovery method, apparatus, and device, and a storage medium. The method includes: first acquiring a data sample to be detected from a target business asset object, and then detecting whether there is a data segment in the data sample to be detected that conforms to a business entity identifier format; if it is determined that there is a data segment in the data sample to be detected that conforms to the business entity identifier format, invoking at least one business entity service to determine whether user data can be acquired based on the data segment; and if it is determined that the user data has been acquired based on the data segment, determining that the target business asset object stores the user data. Apparently, based on a relationship between a business entity identifier and the user data, this embodiment of the present disclosure achieves automatic discovery of the user data by determining whether there is the business entity identifier in the target business asset object, thereby improving the accuracy of user data discovery.

## Description

### CROSS-REFERENCE TO RELATED APPLICATION(S)

This application claims priority to Chinese Inventive Patent Application No. 202211635352.5, entitled "DATA DISCOVERY METHOD, APPARATUS, AND DEVICE, AND STORAGE MEDIUM", and filed on December 19, 2022, which is incorporated in its entirety herein by reference.

### FIELD

The present disclosure relates to the field of data processing, and in particular, to a data discovery method and apparatus, a device and a storage medium.

### BACKGROUND

In compliance governance projects related to privacy and security, the first step is to clearly define the scope of governance, such as specific business storage or services. Currently, among methods for discovering whether business storage or services contain data related to privacy and security, a manual annotation method is mainly used to determine whether the business storage or services contain the data related to privacy and security, such as user data.

Apparently, using the manual annotation method needs to consume significant human resources, and due to factors such as business changes, the accuracy rate of manual annotation is low. Therefore, how to improve the accuracy of user data discovery is a pressing technical problem that needs to be solved.

### SUMMARY

In order to solve the above technical problem, an embodiment of the present disclosure provides a data discovery method.

In a first aspect, the present disclosure provides a data discovery method. The method includes:
acquiring a data sample to be detected from a target business asset object;
detecting whether there is a data segment in the data sample to be detected that conforms to a business entity identifier format, where the business entity identifier format is used to represent a format feature of a business entity identifier field, and the business entity identifier field is used to carry a business entity identifier associated with a user;
in response to determining that there is a data segment in the data sample to be detected that conforms to the business entity identifier format, invoking at least one business entity service to determine whether user data is capable to be acquired based on the data segment, where the business entity service is used to acquire corresponding user data based on a business entity identifier; and
in response to determining that the user data has been acquired based on the data segment, determining that the target business asset object has the user data stored therein.

In an optional implementation, the business entity identifier format includes one or more identifier formats, and before invoking the business entity service to determine whether the user data is capable to be acquired based on the data segment, the method further includes:
in response to determining that there is a data segment in the data sample to be detected that conforms to a first identifier format, determining a business entity service corresponding to the first identifier format; and
invoking the business entity service to determine whether the user data is capable to be acquired based on the data segment includes:
invoking the business entity service corresponding to the first identifier format to determine whether the user data is capable to be acquired based on the data segment.

In an optional implementation, different business entity services are used to acquire corresponding user data based on business entity identifiers of different business entity types, and invoking the business entity service corresponding to the first identifier format to determine whether the user data is capable to be acquired based on the data segment includes:
invoking a first business entity service of the business entity service corresponding to the first identifier format to determine whether the user data is capable to be acquired based on the data segment; and
the method further includes:
in response to determining that the user data has been acquired based on the data segment, determining that the target business asset object has user data of a business entity type corresponding to the first business entity service stored therein.

In an optional implementation, the method further includes:
in response to determining that the user data has been acquired based on the data segment, determining that the data segment belongs to a business entity identifier of the business entity type corresponding to the first business entity service.

In an optional implementation, invoking the first business entity service of the business entity service corresponding to the first identifier format to determine whether the user data is capable to be acquired based on the data segment includes:
invoking the first business entity service of the business entity service corresponding to the first identifier format and using the data segment as an input of the first business entity service to determine whether to output the user data belonging to the business entity type corresponding to the first business entity service.

In an optional implementation, business entity identifiers of the different business entity types include at least one of a user identifier, a device identifier, and a multimedia resource identifier.

In an optional implementation, before detecting whether there is a data segment in the data sample to be detected that conforms to the business entity identifier format, the method further includes:
receiving a target detection list from a preset configuration center, where the target detection list includes business entity identifier formats corresponding to business entity identifiers of different business entity types; and
acquiring a business entity identifier format corresponding to a business entity identifier of each business entity type from the target detection list.

In a second aspect, the present disclosure provides a data discovery apparatus. The apparatus includes:
an acquiring module, configured to acquire a data sample to be detected from a target business asset object;
a detection module, configured to detect whether there is a data segment in the data sample to be detected that conforms to a business entity identifier format, where the business entity identifier format is used to represent a format feature of a business entity identifier field, and the business entity identifier field is used to carry a business entity identifier associated with a user;
a first determination module, configured to invoke at least one business entity service to determine whether user data is capable to be acquired based on the data segment in response to determining that there is a data segment in the data sample to be detected that conforms to the business entity identifier format, where the business entity service is used to acquire corresponding user data based on the business entity identifier; and
a second determination module, configured to determine that the target business asset object stores the user data in response to determining that the user data has been acquired based on the data segment.

In a third aspect, the present disclosure provides a computer-readable storage medium, having instructions stored therein. The instructions, when running on a terminal device, cause a terminal device to implement the above method.

In a fourth aspect, the present disclosure provides a data discovery device, including a memory, a processor, and a computer program stored on the memory and running on the processor. The computer program, when executed by the processor, implements the above method.

In a fifth aspect, the present disclosure provides a computer program product. The computer program product includes a computer program/instruction. The computer program/instruction, when executed by a processor, implements the above method.

Compared with the prior art, the technical solutions provided in the embodiments of the present disclosure at least have the following advantages:
an embodiment of the present disclosure provides data discovery method, firstly, the data sample to be detected is acquired from the target business asset object, and then whether there is the data segment in the data sample to be detected that conforms to the business entity identifier format is detected; if it is determined that there is the data segment in the data sample to be detected that conforms to the business entity identifier format, at least one business entity service is invoked to determine whether the user data can be acquired based on the data segment; and if it is determined that the user data has been acquired based on the data segment, it is determined that the target business asset object has the user data stored therein. Apparently, based on a relationship between the business entity identifier and the user data, the embodiment of the present disclosure achieves automatic discovery of the user data by determining whether there is the business entity identifier in the target business asset object, thereby improving the accuracy of user data discovery.

### BRIEF DESCRIPTION OF THE DRAWINGS

The accompanying drawings herein are incorporated into the specification to form a part of the specification, illustrate embodiments conforming to the present disclosure, and are used to explain the principle of the present disclosure together with the specification.

In order to describe the technical solutions in the embodiments of the present disclosure or in the prior art more clearly, the accompanying drawings required to be used in descriptions of the embodiments or the prior art will be briefly introduced below, and it is apparent that those of ordinary skill in the art may also obtain other accompanying drawings according to these accompanying drawings without creative work.
FIG. 1 is a flowchart of a data discovery method according to an embodiment of the present disclosure;

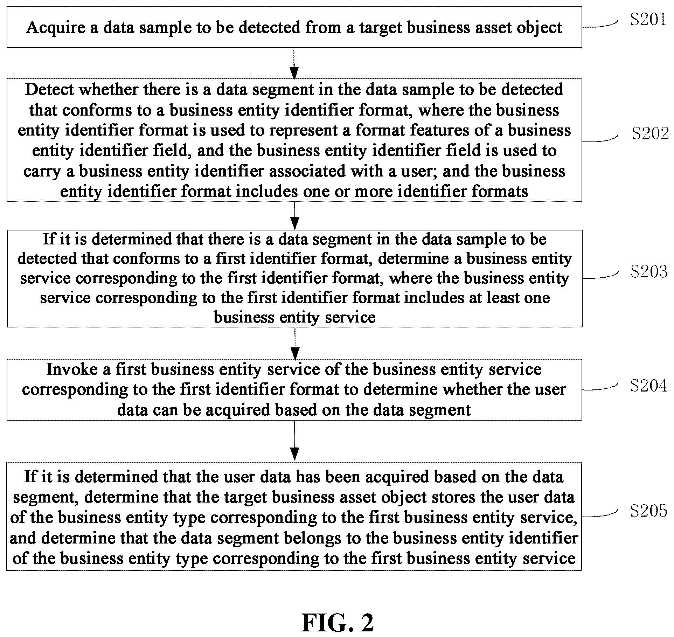

FIG. 2 is a flowchart of another data discovery method according to an embodiment of the present disclosure;
FIG. 3 is a schematic diagram of a structure of a data discovery apparatus according to an embodiment of the present disclosure; and
FIG. 4 is a schematic diagram of a structure of a data discovery device according to an embodiment of the present disclosure.

### DETAILED DESCRIPTION OF EMBODIMENTS

To have a more clear understanding of the above objectives, features, and advantages of the present disclosure, the solution of the present disclosure is further described below. It should be noted that the embodiments and features of the embodiments in the present disclosure can be combined with each other without conflicts.

Many specific details are elaborated in the following description to facilitate a full understanding of the present disclosure, but the present disclosure may also be implemented in methods different from those described herein. Apparently, the embodiments in the specification are only a part rather all of the embodiments of the present disclosure.

In compliance governance projects related to privacy and security, the first step is to clearly define the scope of governance, such as specific business storage or services. Currently, among methods for discovering whether business storage or services contain data related to privacy and security, a manual annotation method is mainly used to determine whether business storage or services contain data related to privacy and security, such as user data.

Apparently, using the manual annotation method needs to consume significant human resources, and due to factors such as business changes, the accuracy rate of manual annotation is low. Therefore, how to improve the accuracy of user data discovery is a pressing technical problem that needs to be solved.

Accordingly, an embodiment of the present disclosure provides a data discovery method. Firstly, a data sample to be detected is acquired from a target business asset object, and then whether there is a data segment in the data sample to be detected that conforms to a business entity identifier format is detected; if it is determined that there is a data segment in the data sample to be detected that conforms to the business entity identifier format, at least one business entity service is invoked to determine whether user data can be acquired based on the data segment; and if it is determined that the user data has been acquired based on the data segment, it is determined that the target business asset object has the user data stored therein. Apparently, based on a relationship between a business entity identifier and the user data, the embodiment of the present disclosure achieves automatic discovery of the user data by determining whether there is the business entity identifier in the target business asset object, thereby improving the accuracy of user data discovery.

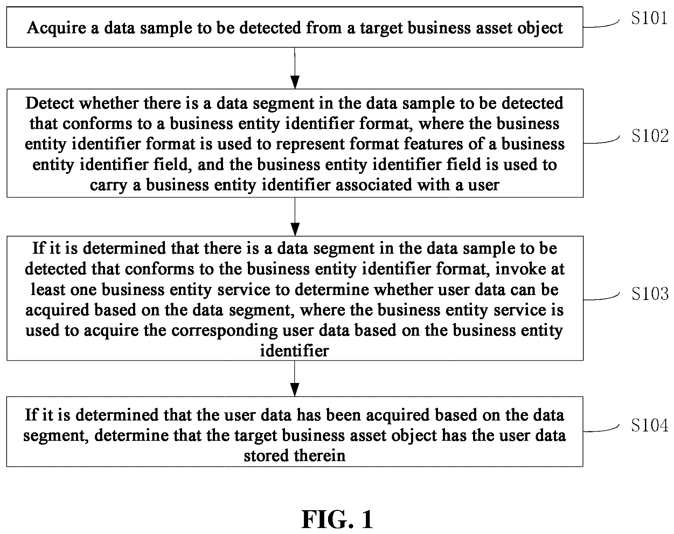

Based on this, an embodiment of the present disclosure provides a data discovery method. Referring to FIG. 1, which is a flowchart of a data discovery method according to an embodiment of the present disclosure. The method includes:
S101: a data sample to be detected from a target business asset object is acquired.

In the embodiment of the present disclosure, business asset objects may include business storage or business services on a certain business line. The target business asset object may be a pre-determined business asset object with demands for user data discovery.

In the embodiment of the present disclosure, acquiring a data sample to be detected from a target business asset object may include: acquiring a data sample from business storage of the target business asset object as the data sample to be detected, or acquiring real-time data traffic from a business service of the target business asset object as the data sample to be detected.

S102: whether there is a data segment in the data sample to be detected that conforms to a business entity identifier format is detected.

The business entity identifier format is used to represent a format feature of a business entity identifier field, and the business entity identifier field is used to carry a business entity identifier associated with the user.

In the embodiment of the present disclosure, the business entity identifier field may be used to carry the business entity identifier associated with the user. In other words, the business entity identifier field stores the business entity identifier associated with the user, and through the business entity identifier, data information related to the user, namely user data, can be associated.

In the embodiment of the present disclosure, the business entity identifier field may include fields, such as user_ID, device_ID, and item_ID.

Assuming that item_ID (a video meta information identifier) is used as a primary key for querying user video information, all video data, such as all video submissions, created by the user through user_ID (a user identifier) can be queried.

In the embodiment of the present disclosure, the business entity identifier format may be used to represent the format feature of the business entity identifier field, where the format feature of the business entity identifier field may include a length feature, a data type feature, etc. Data types may include a numerical value, a character, a binary number, or the like. Assuming that the business entity identifier field is an Android device identifier field, with the format feature being a continuous 16-bit random string, and the format feature of the Android device identifier field may be represented using the 16-bit random string.

In an optional implementation, the data sample to be detected may be identified so as to determine a data segment in the data sample to be detected that can successfully match the business entity identifier format, thereby achieving the purpose of detecting whether there is a data segment in the data sample to be detected that conforms to the business entity identifier format. For example, assuming that the format feature of the device identifier field is a 16-bit random string, after acquiring the data sample to be detected, by identifying the data sample to be detected and matching the data sample to be detected with the format feature of the 16-bit string, it may be determined that there is data segment in the data sample to be detected that conforms to the format feature of the 16-bit string.

In practical applications, a target detection list from a preset configuration center may be received, and a business entity identifier format corresponding to a business entity identifier of each business entity type may be acquired from the target detection list. The target detection list in the preset configuration center is predetermined based on user data discovery demands, and includes a correspondence between the business entity types, the business entity identifiers, and the business entity identifier formats.

In the embodiment of the present disclosure, the target detection list in the preset configuration center includes the business entity identifier formats corresponding to the business entity identifiers of different business entity types, as shown in Table 1 below, which illustrates the correspondence between the business entity identifiers and the business entity identifier formats.

**Table 1**

| Business Entity Identifier | user_ID | device_ID | item_ID |
|---|---|---|---|
| Business Entity Identifier Format | Generative Format of Identifier Generator | Device-native Identifier Format | Generative Format of Identifier Generator |

After the target detection list from the preset configuration center is received, the business entity identifier formats corresponding to the business entity identifiers of various business entity types are acquired from the target detection list, and then based on the correspondence between the business entity identifiers and the business entity identifier formats, whether there is a data segment in the data sample to be detected that conforms to the business entity identifier format is detected.

S103: if it is determined that there is a data segment in the data sample to be detected that conforms to the business entity identifier format, at least one business entity service to determine whether user data can be acquired based on the data segment is invoked.

The business entity service is used to acquire the corresponding user data based on the business entity identifier.

In the embodiment of the present disclosure, the business entity service may be used to maintain the correspondence between the business entity identifiers and the user data. For example, assuming that there is a correspondence between a business entity identifier A and user data B in the business entity service, the user data B corresponding to the business entity identifier A may be acquired by invoking the business entity service.

In the embodiment of the present disclosure, the user data refers to data related to users, including user-published video work information, user device information, and other data related to the users.

In the embodiment of the present disclosure, determining that there is the data segment in the data sample to be detected that conforms to the business entity identifier format indicates that the format of the data segment conforms to the business entity identifier format, but whether the data segment is the business entity identifier requires further determination.

Accordingly, in the embodiment of the present disclosure, by invoking the business entity service, whether the data segment that conforms to the business entity identifier format is the business entity identifier is further determined. Specifically, by invoking the business entity service, the data segment that conforms to the business entity identifier format is used as the input of the business entity service, and if the user data can be outputted by the business entity service, it may be determined that the data segment is the business entity identifier. If the user data cannot be outputted by the business entity service, meaning that the user data cannot be acquired based on the data segment, it indicates that the data segment merely conforms to the business entity identifier format in format but is not the business entity identifier.

S104: if it is determined that the user data has been acquired based on the data segment, it is determined that the target business asset object has the user data stored therein.

For example, if it is determined that there is a data segment in the data sample to be detected that conforms to an identifier generator format (i.e., the first identifier format), the business entity service corresponding to the identifier generator format may be determined. Assuming that a user service and an item service are included, the user service and the item service are invoked then, and whether the user data can be acquired based on the data segment is determined.

According to the data discovery method provided in the embodiment of the present disclosure, firstly, the data sample to be detected is acquired from the target business asset object, and then whether there is the data segment in the data sample to be detected that conforms to the business entity identifier format is detected; if it is determined that there is the data segment in the data sample to be detected that conforms to the business entity identifier format, at least one business entity service is invoked to determine whether the user data can be acquired based on the data segment; and if it is determined that the user data has been acquired based on the data segment, it is determined that the target business asset object has the user data stored therein. Apparently, based on the relationship between the business entity identifier and the user data, the embodiment of the present disclosure achieves automatic discovery of the user data by determining whether there is the business entity identifier in the target business asset object, thereby improving the accuracy of user data discovery.

In practical applications, different business entity services may be used to acquire the corresponding user data based on business entity identifiers of different business entity types. In other words, there is a correspondence between the business entity services and the business entity types.

The business entity identifiers of the different business entity types include at least one of a user identifier, a device identifier, and a multimedia resource identifier.

For example, user data corresponding to user_ID (i.e., the user identifier) may be acquired by invoking the user service, user data corresponding to item_ID (i.e., the multimedia resource identifier) may be acquired by invoking the item service, and so on.

In an optional embodiment, after determining that there is a data segment in a data sample to be detected that conforms to a business entity identifier format, whether user data can be acquired based on the above data segment may be further determined by invoking at least one business entity service, thereby determining whether the data segment belongs to a business entity identifier.

Based on the above embodiment, an embodiment of the present disclosure further provides a flowchart of another data discovery method. The method includes:
S201: a data sample to be detected from a target business asset object is acquired.
S202: whether there is a data segment in the data sample to be detected that conforms to a business entity identifier format is detected, where the business entity identifier format is used to represent a format feature of a business entity identifier field, and the business entity identifier field is used to carry a business entity identifier associated with a user; and the business entity identifier format includes one or more identifier formats.

In the embodiment of the present disclosure, the business entity identifier format may include one or more identifier formats. For example, the business entity identifier format may include a generative format of an identifier generator, a device-native identifier format, etc. Therefore, before invoking the business entity service to determine whether user data can be acquired based on the data segment, it is necessary to match each business entity identifier format with the data sample to be detected, thereby determining whether there is a data segment in the data sample to be detected that conforms to any of the business entity identifier formats.

S203: if it is determined that there is a data segment in the data sample to be detected that conforms to a first identifier format, a business entity service corresponding to the first identifier format is determined, where the business entity service corresponding to the first identifier format includes at least one business entity service.

In the embodiment of the present disclosure, the first identifier format may be any identifier format from the business entity identifier formats.

For example, if it is determined that there is a data segment in the data sample to be detected that conforms to the generative format of the identifier generator (i.e., the first identifier format), business entity services corresponding to the generative format of the identifier generator, such as the user service and the item service, may be determined as the business entity services corresponding to the first identifier format.

S204: a first business entity service of the business entity service corresponding to the first identifier format is invoked to determine whether the user data can be acquired based on the data segment.

In the embodiment of the present disclosure, after determining the at least one business entity service corresponding to the first identifier format, each business entity service is invoked to further determine whether the user data can be acquired based on the data segment, where the first business entity service belongs to any of the at least one business entity service corresponding to the first identifier format.

For example, assuming that there is a data segment in the data sample to be detected that conforms to the generative format of the identifier generator, business entity services corresponding to the identifier generator, such as the user service and the item service are respectively invoked to determine whether user data can be acquired based on the data segment.

In an optional implementation, to further determine whether the user data can be acquired based on the data segment, in the embodiment of the present disclosure, by invoking the first business entity service of the business entity service corresponding to the first identifier format and using the data segment as the input of the first business entity service to determine whether the user data belonging to the business entity type corresponding to the first business entity service is outputted.

If the user data belonging to the business entity type corresponding to the first business entity service can be outputted by the first business entity service, it may be determined that the data segment is the business entity identifier of the business entity type corresponding to the first business entity service; and if the user data cannot be outputted by the first business entity service, it indicates that the data segment merely conforms to the first identifier format in format, but is not the business entity identifier of the business entity type corresponding to the first business entity service.

S205: If it is determined that the user data has been acquired based on the data segment, that the target business asset object stores the user data of the business entity type corresponding to the first business entity service is determined, and that the data segment belongs to the business entity identifier of the business entity type corresponding to the first business entity service is determined.

For example, the item service (i.e., the first business entity service) is first invoked to determine whether the user data can be acquired based on the data segment conforming to the identifier generator format; and if it is determined that the user data has been acquired based on the data segment conforming to the identifier generator format, it may be determined that the target business asset object stores the user data of the business entity type corresponding to the item service, namely video-related user data corresponding to the item service.

In an optional implementation, if it is determined that the user data has been acquired based on the data segment, it may be determined that the data segment belongs to the business entity identifier of the business entity type corresponding to the first business entity service.

For example, the item service is invoked, and if it is determined that the user data has been acquired based on the data segment, it may be determined that the data segment belongs to the user identifier of the business entity type corresponding to the item service, namely a user video identifier.

Apparently, according to the embodiment of the present disclosure, by invoking the business entity service, whether the user data can be acquired based on the data segment is determined, thereby determining whether the target business asset object stores the user data of the business entity type corresponding to the first business entity service, and achieving automatic discovery of the user data.

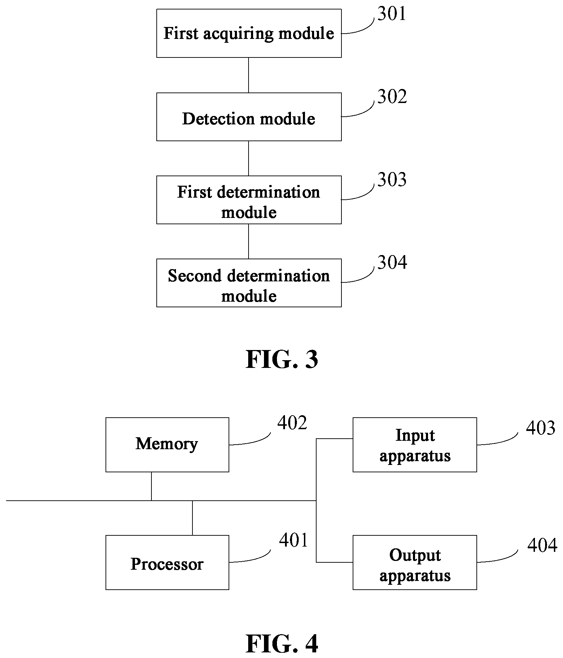

Based on the above method embodiment, the present disclosure further provides a data discovery apparatus. Referring to FIG. 3, which is a schematic diagram of a structure of a data discovery apparatus according to an embodiment of the present disclosure, the apparatus includes:
a first acquiring module 301, configured to acquire a data sample to be detected from a target business asset object;
a detection module 302, configured to detect whether there is a data segment in the data sample to be detected that conforms to a business entity identifier format, where the business entity identifier format is used to represent a format feature of a business entity identifier field, and the business entity identifier field is used to carry a business entity identifier associated with a user;
a first determination module 303, configured to invoke at least one business entity service to determine whether user data can be acquired based on the data segment in response to determining that there is a data segment in the data sample to be detected that conforms to the business entity identifier format, where the business entity service is used to acquire corresponding user data based on the business entity identifier; and
a second determination module 304, configured to determine that the target business asset object stores the user data in response to determining that the user data has been acquired based on the data segment.

In an optional implementation, the business entity identifier format includes one or more identifier formats. The apparatus further includes:
a third determination module, configured to determine a business entity service corresponding to a first identifier format if it is determined that there is a data segment in the data sample to be detected that conforms to the first identifier format.

Correspondingly, the first determination module includes:
a first determination submodule, configured to invoke the business entity service corresponding to the first identifier format to determine whether the user data can be acquired based on the data segment.

In an optional implementation, different business entity services are used to acquire corresponding user data based on business entity identifiers of different business entity types. The first determination module includes:
a second determination submodule, configured to invoke a first business entity service of the business entity service corresponding to the first identifier format to determine whether the user data can be acquired based on the data segment.

Correspondingly, the apparatus further includes:
a fourth determination module, configured to determine that the target business asset object has user data of a business entity type corresponding to the first business entity service stored therein if it is determined that the user data has been acquired based on the data segment.

In an optional implementation, the apparatus further includes:
a fifth determination module, configured to determine that the data segment belongs to a business entity identifier of the business entity type corresponding to the first business entity service if it is determined that the user data has been acquired based on the data segment.

In an optional implementation, the second determination submodule includes:
a third determination submodule, configured to invoke the first business entity service of the business entity service corresponding to the first identifier format and use the data segment as an input of the first business entity service to determine whether to output the user data belonging to the business entity type corresponding to the first business entity service.

In an optional implementation, business entity identifiers of the different business entity types include at least one of a user identifier, a device identifier, and a multimedia resource identifier.

In an optional implementation, the apparatus further includes:
a receiving module, configured to receive a target detection list from a preset configuration center, where the target detection list includes business entity identifier formats corresponding to business entity identifiers of different business entity types; and
a second acquiring module, configured to a business entity identifier format corresponding to a business entity identifier of each business entity type from the target detection list.

According to the data discovery apparatus provided in the embodiment of the present disclosure, firstly, the data sample to be detected is acquired from the target business asset object, and then whether there is the data segment in the data sample to be detected that conforms to the business entity identifier format is detected; if it is determined that there is the data segment in the data sample to be detected that conforms to the business entity identifier format, at least one business entity service is invoked to determine whether the user data can be acquired based on the data segment; and if it is determined that the user data has been acquired based on the data segment, it is determined that the target business asset object stores the user data. Apparently, based on a relationship between the business entity identifier and the user data, the embodiment of the present disclosure achieves automatic discovery of the user data by determining whether there is the business entity identifier in the target business asset object, thereby improving the accuracy of user data discovery.

In addition to the above method and apparatus, an embodiment of the present disclosure further provides a computer-readable storage medium. The computer-readable storage medium has instructions stored therein. The instructions, when running on a terminal device, cause the terminal device to implement the data discovery method according to the embodiments of the present disclosure.

An embodiment of the present disclosure further provides a computer program product. The computer program product includes a computer program/instruction. The computer program/instruction, when executed by a processor, implements the data discovery method according to the embodiments of the present disclosure.

In addition, an embodiment of the present disclosure further provides a data discovery device. Referring to FIG. 4, the device may include:
a processor 401, a memory 402, an input apparatus 403, and an output apparatus 404. There may be one or more processors 401 in the data discovery device, with FIG. 4 illustrating an example of a single processor. In some embodiments of the present disclosure, the processor 401, the memory 402, the input apparatus 403, and the output apparatus 404 may be connected through a bus or other methods. Bus connection is used as an example in FIG. 4.

The memory 402 may be configured to store software programs and modules. The processor 401 performs various functional applications and data processing of the data discovery device by running the software programs and the modules stored in the memory 402.The memory 402 may mainly include a program storage area and a data storage area, where the program storage area may store an operating system, an application program needed by at least one function, etc. In addition, the memory 402 may include a high-speed random access memory, and may further include a nonvolatile memory, such as at least one magnetic disk storage device, flash memory, or another volatile solid-state storage device. The input apparatus 403 may be configured to receive inputted number or character information and generate signal inputs relevant to user settings and function control of the data discovery device.

Specifically, in the embodiment, the processor 401 may load executable files corresponding to processes of one or more application programs into the memory 402 according to following instructions, and the processor 401 runs the application programs stored in the memory 402, thereby implementing various functions of the above data discovery device.

It should be noted that herein, relational terms such as "first" and "second" are used only to distinguish one entity or operation from another and do not necessarily require or imply any actual relationship or order between these entities or operations. In addition, the terms "comprise", "include", or any other variations thereof are intended to cover non-exclusive inclusions, and therefore a process, a method, an article, or a device including a series of elements not only includes those elements but also includes other elements not clearly listed, or further includes elements inherent to the process, the method, the article, or the device. In the absence of further restrictions, an element specified by the phrase "including a..." does not exclude the existence of other identical elements in the process, the method, the article, or the device that includes the element.

The above contents are merely specific implementations of the present disclosure, such that those skilled in the art can understand or implement the present disclosure. More modifications for these embodiments are apparent to those skilled in the art, and general principles defined herein may be implemented in other embodiments without departing from the spirit or scope of the present disclosure. Therefore, the present disclosure will not be limited by these embodiments described herein but is required to conform to a widest scope consistent with the principles and novel characteristics disclosed herein.

## Claims

1. A data discovery method, comprising:
acquiring a data sample to be detected from a target business asset object;
detecting whether there is a data segment in the data sample to be detected that conforms to a business entity identifier format, wherein the business entity identifier format is used to represent a format feature of a business entity identifier field, and the business entity identifier field is used to carry a business entity identifier associated with a user;
in response to determining that there is a data segment in the data sample to be detected that conforms to the business entity identifier format, invoking at least one business entity service to determine whether user data is capable to be acquired based on the data segment, wherein the business entity service is used to acquire corresponding user data based on a business entity identifier; and
in response to determining that the user data has been acquired based on the data segment, determining that the target business asset object has the user data stored therein.

2. The method of claim 1, wherein the business entity identifier format comprises one or more identifier formats, and before invoking the business entity service to determine whether the user data is capable to be acquired based on the data segment, the method further comprises:
in response to determining that there is a data segment in the data sample to be detected that conforms to a first identifier format, determining a business entity service corresponding to the first identifier format; and
wherein invoking the business entity service to determine whether the user data is capable to be acquired based on the data segment comprises:
invoking the business entity service corresponding to the first identifier format to determine whether the user data is capable to be acquired based on the data segment.

3. The method of claim 2, wherein different business entity services are used to acquire corresponding user data based on business entity identifiers of different business entity types, and invoking the business entity service corresponding to the first identifier format to determine whether the user data is capable to be acquired based on the data segment comprises:
invoking a first business entity service of the business entity service corresponding to the first identifier format to determine whether the user data is capable to be acquired based on the data segment; and
wherein the method further comprises:
in response to determining that the user data has been acquired based on the data segment, determining that the target business asset object has user data of a business entity type corresponding to the first business entity service stored therein.

4. The method of claim 3, further comprising:
in response to determining that the user data has been acquired based on the data segment, determining that the data segment belongs to a business entity identifier of the business entity type corresponding to the first business entity service.

5. The method of claim 3, wherein invoking the first business entity service of the business entity service corresponding to the first identifier format to determine whether the user data is capable to be acquired based on the data segment comprises:
invoking the first business entity service of the business entity service corresponding to the first identifier format and using the data segment as an input of the first business entity service to determine whether to output the user data belonging to the business entity type corresponding to the first business entity service.

6. The method of any of claims 1 to 5, wherein business entity identifiers of the different business entity types comprise at least one of a user identifier, a device identifier, and a multimedia resource identifier.

7. The method of claim 1, wherein before detecting whether there is a data segment in the data sample to be detected that conforms to the business entity identifier format, the method further comprises:
receiving a target detection list from a preset configuration center, wherein the target detection list comprises business entity identifier formats corresponding to business entity identifiers of different business entity types; and
acquiring a business entity identifier format corresponding to a business entity identifier of each business entity type from the target detection list.

8. A data discovery apparatus, comprising:
an acquiring module, configured to acquire a data sample to be detected from a target business asset object;
a detection module, configured to detect whether there is a data segment in the data sample to be detected that conforms to a business entity identifier format, wherein the business entity identifier format is used to represent a format feature of a business entity identifier field, and the business entity identifier field is used to carry a business entity identifier associated with a user;
a first determination module, configured to invoke at least one business entity service to determine whether user data is capable to be acquired based on the data segment in response to determining that there is a data segment in the data sample to be detected that conforms to the business entity identifier format, wherein the business entity service is used to acquire corresponding user data based on the business entity identifier; and
a second determination module, configured to determine that the target business asset object stores the user data in response to determining that the user data has been acquired based on the data segment.

9. A computer-readable storage medium, having instructions stored therein, wherein the instructions, when running on a terminal device, cause the terminal device to implement the method of any of claims 1 to 7.

10. A data discovery device, comprising: a memory, a processor, and a computer program stored on the memory and runnable on the processor, wherein the processor, when executing the computer program, implements the method of any of claims 1 to 7.
